# EUROPEAN PATENT APPLICATION

(11) **EP 1 080 878 A2**
(43) Date of publication of application: **07.03.2001**
(21) Application number: 00307326.9
(22) Date of filing: 24.08.2000
(51) Int. Cl.: B32B 7/02, B32B 27/32

(54) **Improved films**

(30) Priority: 25.08.1999 GB 9920010
(71) Applicant: British Polythene Limited, Greenock PA15 2RP (GB)
(72) Inventor: Wheldon, Anne Elizabeth, Reading RG2 7HA (GB); Davis, Frederick John, Earley, Reading, RG6 7PG (GB); Gilbert, Andrew, Earley, Reading RG6 5TR (GB); Haeringen van, Cornelius Johannes, 7322 AP Apeldoorn (NL); Pearson, Simon,, Charvil, Reading RG10 9UG (GB); Hadley, Paul, Goring Heath, Reading RG8 7RX (GB); West, Jonathon Spencer, Harpenden, Herts AL5 5JH (GB); Henbest, Richard George Cleveland, Cleveland TS14 7BX (GB)
(74) Representative: Ede, Eric

(57) **Abstract**

A film for use in cultivation of plants comprises a plurality of layers, at least one of which layers imparts light transmission modifying properties to the film and is selected from a condensation polymer which is compatible with polyolefin polymers under film-forming conditions, said layers also incorporating at least one phthalocyanine compound selected on the basis of having a specific light absorption peak between 720 and 780 nm, and having a maximum absorption coefficient in that range of at least twice that of any other absorption peak in the 400 to 700 nm band, and at least one other of which layers is selected from a durable weather resistant polyolefin polymer or copolymer which exhibits substantially no adverse interference with the light transmission modifying properties of the, or each, light transmission modifying layer.

## Description

### Technical Field of the Invention

The invention relates to polymer films for use in horticulture, e.g. as plant cover or shading materials for influencing the growth of plants by selectively limiting or filtering the range of natural light available to the growing plants.

### Background of the Invention

In order to optimise commercial indoor cultivation of plants there exists a need to control the growth of plants in a greenhouse or similar highly glazed or transparently clad growing-house structure. A variety of structures are available for plant growth purposes including traditional pitched roof aluminium frame greenhouses, geodesic frame greenhouses and tunnel greenhouses. The invention to be described herein is particularly suited for commercial scale tunnel growing houses. However, simply for ease of reference the word "**greenhouse**" will be used herein to mean any type of structure within which a cultivation area is defined for plant growth purposes.

In particular it is desirable to improve the quality of cultivated plants without the need to treat the plants with growth-regulating chemicals such as chlormequat chloride, daminozide, paclobutrazol, etc.

It has been established that changes in the spectral quality of solar radiation can influence plant growth, the effect being dependent on the type of plant. Studies have been undertaken on the photoperception of higher plants. Reference may be made to a paper by Harry Smith, Dept. of Botany, University of Leicester (UK), in *Ann. Rev. Plant Physiol.* 1982. **33**:481-518m which includes discussion on the use of bichromatic ratios in investigating plant growth, particularly the ratio of Red:Far Red defined there as the ratio of photon fluence rate in 10 nm band centred on 730nm to the photon fluence rate in 10 nm (R:FR).

There are many reports of research into the influence of light quality and spectral filtration on plant growth in the literature. The following references are illustrative of the known literature on this subject:
Morgan D C, Smith H (1976) *Nature* p 262;
Mortenson, L M, Stromme, E 1987, "Effects of light quality on some greenhouse crops", Scient. Hortic. **33**:27-36;
Mortenson, L M, 1990, "Effects of temperature and light quality on growth and flowering of *Begonia X hiemalis* Fotsch. and *Campanula isophylla* Moratti." Scient. Hortic. **44**:309-314;
McMahon, M J; Kelly, J W; and Decoteau, D R 1991, "Growth of *Dendranthema X grandiflorum* (Ramat.) Kitamura under various spectral filters", *J. Amer. Soc. Hortic. Sci.* **116** (6):950-954;
Rakapakse, N C and Kelly, J W 1995, "Spectral filters and growing season influence growth and carbohydrate status of chrysanthemum" J. Amer. Soc. Hort. Sci. **120** (1):78-83.

There have been many proposals to apply knowledge gained from such research to a commercial purpose. Thus a proposal to provide a sheet for a plant cultivation greenhouse is described in JP-A-62 17 649. The sheet is made by blending transparent resin and metal phthalocyanine then moulding to the required form. The proposed sheet has 70% or higher rate of reduction of light having wavelengths of 750-1200 nm which is in range of near IR rays in natural light. The sheet is prepared by blending a transparent resin such as polyethylene, polypropylene, ethylenepropylene copolymer with metal phthalocyanine. The proposed sheet is of use as a shading material, as an alternative to a cheese-cloth, in the cultivation of horse radish and ginseng.

Reference may also be made to GB 2 314 844, GB 2 165 547, EP 0 732 049, and US 4 913 846, wherein the use of phthalocyanine pigments which have specific light absorption properties in the near infra-red are suggested as suitable for use in films which, when used as a material for greenhouses or plant covers, bring about desirable changes in plant growth and morphology. In particular, GB 2 314 844 disclosed previous work by the present inventors that established that certain substituted alkoxy-phthalocyanines when used for this application have the desired absorption properties.

Despite the amount of research work published in the literature on spectral data and chemical agents for use as filters in a cover material for influencing plant growth there remains a need to develop a commercially viable product having the appropriate properties desired for a plant growth regulating cover film. Significant though the understanding of the spectral influence on plant growth may be, the application of this knowledge in the field is hampered by various practical problems. A cover film has to be durable to withstand weathering, which amongst other chemical and physical requirements, establishes a basic need to withstand wind and rain, heat and UV exposure, and environmental pollutants. The cover film must remain sufficiently transparent within the chosen spectral range throughout its commercial life, which ideally will exceed several growing seasons. The need to consider economic factors, such as raw material costs, manufacturing and processing costs, and compatibility with the selected spectral range filtering additives, such as the phthalocyanine substances referred to above poses problems in the choice of base film carrier material. However, as a result of the inventors' continued diligent research in this field it has now been found that certain combinations of materials unexpectedly offer advantages in such use, particularly concerning the lifetime of the film in the target use.

Thus having the objective of providing improvements in cover films for regulating plant growth, and providing cover materials useful in horticulture generally, the present invention has been developed.

### Summary of the Invention

According to the present invention there is provided a film suitable for use in cultivation of plants, comprising a plurality of layers, at least one of which layers imparts light transmission modifying (LTM) properties to the film and is selected from a condensation polymer which is compatible with polyolefin polymers under film-forming conditions, said layer also incorporating at least one phthalocyanine compound selected on the basis of having a specific light absorption peak between 720 and 780 nm, and having a maximum absorption coefficient in that range of at least twice that of any other absorption peak in the 400 to 700 nm band, and at least one other of which layers is selected from a durable weather resistant polyolefin polymer or copolymer which exhibits substantially no adverse interference with the LTM properties of the, or each, LTM layer.

Preferably, the film is formed from a core polymer of polyamide or polyester containing the phthalocyanine compound contributing to the LTM properties of the film, and at least one outer polymer of the polyolefin polymer or copolymer type.

The condensation polymer suitable for forming the core of the film may be selected from aliphatic or aromatic polyesters or polyamides. Polyamides such as NYLON 6, NYLON 6,6, or NYLON 6,10 are preferred examples. The choice of polyamide (or polyester) will be made with the objective of compatibility with polyolefin, with regard to processing in film forming, especially having regard to polyolefin co-extrusion techniques. A particularly preferred core polymer based on polyamide in this regard is available commercially as a co-processable polymer "alloy" of polyamide/polyolefin known by the Trade Name "ORGALLOY" from Elf Atochem (France). Several polymers of this type are known. Thus, such a film may include as a core polymer an "alloy" comprising (a) from 55 to 70% polyamide (NYLON 6), (b) from 5 to 15% of an ethylene/propylene copolymer, wherein the propylene is the predominant component, grafted with maleic anhydride and condensed with mono-aminooligomers of caprolactam, and (c) the balance to 100% being a sufficient amount of polypropylene, all percentages being by weight. Alternatively, a film may include a core polymer which is a polymer "alloy" comprising (a) from 55 to 70% polyamide (NYLON 6), (b) from 5 to 15% of at least one ethylene copolymer with (i) an alkyl (meth)acrylate or an unsaturated carboxylic vinyl ester and (ii) an unsaturated carboxylic acid anhydride or an unsaturated epoxy, monomer (ii) being grafted or copolymerised, and (c) the balance to 100% being a sufficient amount of polyethylene, all percentages being by weight. A still further possible film includes a core polymer which is a polymer "alloy" comprising (a) from 55 to 70% polyamide (NYLON 6), (b) from 5 to 15% of polyethylene or copolymers of ethylene and an alpha-olefin grafted with maleic anhydride or glycidyl methacrylate, and (c) the balance to 100% being a sufficient amount of polyethylene, all percentages being by weight.

Other ways of achieving compatibility and co-processing success include use of tying reagents or tying layers for linking condensation polymers with polyolefins with a view to thereby achieving optimum mechanical properties. An additive having this purpose of promoting adhesion between dissimilar polymers is commercially available under the trade mark Orevac (Elf Atochem). Still further ways of achieving success are possible using tying agents such as functionalised polymers e.g. copolymers of ethylene with acrylic acid or methacrylic acid or esters of such acids, said copolymers being functionalised by use of an acid anhydride such as maleic anhydride. The concept of tying together polymers which respectively would tend to be incompatible or poorly compatible in a manufacturing process step requiring simultaneous processing thereof, is not unknown in the polymer field. EP-A-0 595 706 mentions the use of tying layers in production of laminates based on polyamide/polyolefin blends.

The outer polymer which serves essentially as a weathering or durable protective covering for the LTM activity core polymer may be selected from a wide range of olefin polymer products, preferably from a polyethylene polymer or copolymer.

The invention preferably uses at least one of the substituted alkoxy-phthalocyanines described in GB 2 314 844 to achieve the intended purpose, and same is suitably incorporated by dispersion or dissolution in the polymer carrier.

### Description of Preferred Embodiments

A particularly preferred film according to the invention has the following construction:
1) A core layer comprising a polyamide or polyester based polymer and a phthalocyanine compound with a specific light absorption peak between 720 and 780 nm, preferably as a narrow band absorption between 725 and 750 nm. The maximum absorption coefficient of the phthalocyanine compound in this range should be at least twice that of any other absorption peak in the 400 to 700 nm wave band. The core polymers can be aliphatic or aromatic polyesters or polyamides such as nylon 6, nylon 6,6, or nylon 6,10. Preferably, the polymer is a polyamide which is co-processable with polyolefins. A preferred material is one of the polyamide: polyolefin 'alloys' such as 'Orgalloy' from Elf Atochem. The concept of polymer alloys is understood in the polymer art. As a matter of reference an example of this type of polymer alloy is described in EP 0 786 319, where, it is mentioned that such an alloy may consist of a terpolymer of 65% polyamide 6 (M.I. 15-17), 25% HDPE, and 10% of a copolymer of ethylene/butyl acrylate/maleic anhydride (90.9/6.0/3.1),(M.I. 5 @ 190 C, 2.16 kg) all of these percentages being by weight.
2) Outer layers consisting of an olefin polymer or copolymer, preferably a polyethylene polymer or copolymer.

This type of film can be produced conveniently by extrusion (blown or cast film process). The film may also beneficially contain the following components:
3) Additives in the layers or as intermediate layers to improve the bonding between the different layers.
4) Stabilisers and ultra-violet light absorbers to protect the film from premature degradation. These can include hindered amine light stabilisers, benzophenone and/or benztriazole compounds.

The preferred phthalocyanine compounds are those described in GB 2 314 844 which offer the optical properties desired in this product and are compatible with a wide range of polymers contemplated for the purposes of this invention. These compounds effectively dissolve or disperse in polymers including polyolefins and especially in polyamides and polyesters. Typically the phthalocyanine compound providing the LTM properties is blended with the polymer and the other selected ingredients required for the carrier film and the compounds are sufficiently homogenised by melt blending in an extrusion system.

The amount of phthalocyanine compound is determined by the need to obtain a suitable peak absorption in the 720 to 780 nm waveband. The absorbance is typically in the range of 0.6 to 3.0, preferably 0.8 to 2.0, corresponding to a transmission of 1% to 16%, approximately. Those skilled in this art will be readily able to realise the amounts to be used and the skilled reader will understand that the concentration required depends upon the thickness of the intended film and the effectiveness of the selected phthalocyanine absorber, but typical amounts required would be 0.1 to 0.2 grams per square metre of film. For example where the LTM film layer has a thickness of 100 microns, the concentration of absorber is 0.1 to 0.25 per cent, whereas in a 50 micron layer, the concentration would need to be twice this level.

The currently preferred group of LTM compounds to be considered here are those of the general formula below 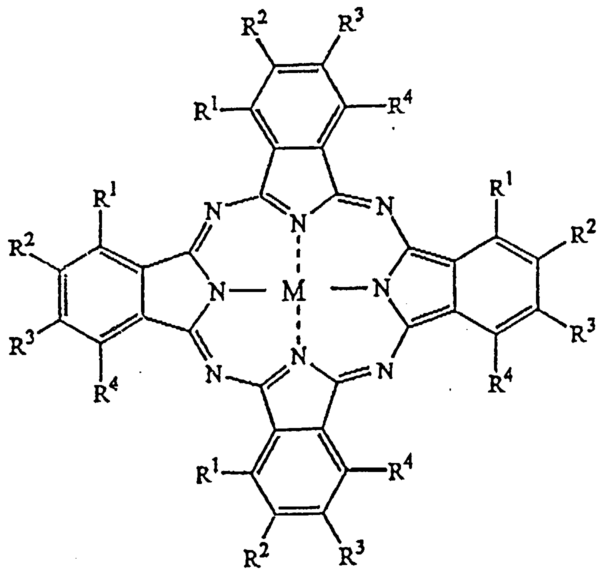 which represents a macrocyclic polydentate ligand and a divalent metal atom (M²⁺), preferably selected from Group II and Group III metals , more preferably from Mg, Fe, Co, Ni, Cu, Zn, and Mn, and wherein the substituents R¹, R², R³, R⁴ may be respectively the same or different groups selected from alkyl, aryl, alkoxy, halogeno, or other functional groups which do not adversely affect the stability or performance of the plant cover or shading material.

### Advantages of the Invention

Advantages offered by the films of the invention include improved lifetimes compared to films where the only polymer is polyethylene, i.e. the absorption characteristics have a reduced tendency to fade.

### Specific Mode for Performance of the Invention

### Example:

A film (A) was made by a blown film co-extrusion process and comprised three layers with the following composition:

**Outer layers** (each 40% of the total thickness)
LLDPE (butene grade)
10% "Orevac" 18302 (from Elf Atochem) - an additive to promote adhesion to a polyamide layer
UV stabilisers as follows: "Chimasorb" 944 (a hindered amine light stabiliser from Ciba-Geigy) 3750 ppm: benzophenone UB absorber 1875 ppm; benztriazole UV absorber 5000 ppm.

**Centre layer** (20% of the total thickness)
"Orgalloy" LE60LM (a polyamide/polyethylene 'alloy' from Elf Atochem)
UV stabilisers as follows: 7500 ppm Chimasorb 944; 3750 ppm benzophenone UV absorber
4000 ppm of (2,2,9,10,16,17,23,24 - octachloro - 1,4,8,11,15,18,22,26 - octabutoxy-phthalocyanato) copper II. These materials were blended together and sufficiently homogenised by melt blending in an extrusion system. The overall film thickness was 150 microns and the film had a peak absorbance of 1.65 at a wavelength of 740 nm, and a secondary peak absorbance of 0.47 at 660 nm.

### Experimental tests:

In a comparative experiment a film such as just described was used as a cover for poinsettia and it was observed that plant height was controlled relative to a plant covered with a film without the phthalocyanine absorber (mean height 47 cm compared to 54 cm).

The same type of film (Film A) was tested in a comparison with a similar film containing the phthalocyanine absorber, but which was made using polyethylene polymers alone (Film B), the durability of the films were evaluated by exposure in a QUV accelerated ageing test machine (UVA fluorescent tubes, maximum light intensity, temperature 60 deg Celsius, light to dark cycle 8hrs:4hrs). Test results were as follows:

| ACCELERATED AGEING TESTS | | |
|---|---|---|
| | **Film A** | **Film B** |
| Original Peak Absorption (at 740 nm) | 1.65 | 1.7 |
| | | |
| Exposure time to reduce absorption at 740 nm to 0.85 | 23 days | 11 days |
| | | |
| FILM A (according to the invention) FILM B (not according to the invention) | | |

## Claims

1. A film for use in cultivation of plants, comprising a plurality of layers, at least one of which layers imparts light transmission modifying properties to the film and is selected from a condensation polymer which is compatible with polyolefin polymers under film-forming conditions, said layers also incorporating at least one phthalocyanine compound selected on the basis of having a specific light absorption peak between 720 and 780 nm, and having a maximum absorption coefficient in that range of at least twice that of any other absorption peak in the 400 to 700 nm band, and at least one other of which layers is selected from a durable weather resistant polyolefin polymer or copolymer which exhibits substantially no adverse interference with the light transmission modifying properties of the, or each, light transmission modifying layer.

2. A film according to claim 1, wherein the layers imparting light transmission modifying properties comprise core polymer layers of polyamide or polyester.

3. A film according to claim 2, wherein the core polymer is selected from aliphatic or aromatic polyesters or polyamides.

4. A film according to claim 2 or claim 3, wherein the core polymer is selected from NYLON 6, NYLON 6,6 and NYLON 6,10.

5. A film according to claim 2 or claim 3, wherein the core polymer is a co-processable polymer "alloy" of polyamide/polyolefin.

6. A film according to claim 2 or claim 3, wherein the core polymer is a polymer "alloy" comprising (a) from 55 to 70% polyamide (NYLON 6), (b) from 5 to 15% of an ethylene/propylene copolymer wherein the propylene is the predominant component, grafted with maleic anhydride and condensed with mono-aminooligomers of caprolactam, and (c) the balance to 100% being a sufficient amount of polypropylene, all percentages being by weight.

7. A film according to claim 2 or claim 3, wherein the core polymer is a polymer "alloy" comprising (a) from 55 to 70% polyamide (NYLON 6), (b) from 5 to 15% of at least one ethylene copolymer with (i) an alkyl (meth)acrylate or an unsaturated carboxylic vinyl ester and (ii) an unsaturated carboxylic acid anhydride or an unsaturated epoxy, monomer (ii) being grafted or copolymerised, and (c) the balance to 100% being a sufficient amount of polyethylene, all percentages being by weight.

8. A film according to claim 2 or claim 3, wherein the core polymer is a polymer "alloy" comprising (a) from 55 to 70% polyamide (NYLON 6), (b) from 5 to 15% of polyethylene or copolymers of ethylene and an alpha-olefin grafted with maleic anhydride or glycidyl methacrylate, and (c) the balance to 100% being a sufficient amount of polyethylene, all percentages being by weight.

9. A film according to any one of claims 1 to 8, which comprises a tying reagent or polymeric agent of a type suitable for promoting sufficient compatibility between condensation polymers and polyolefins to ensure film-forming is achievable.

10. A film according to any one of claims 1 to 9, which comprises at least one substituted alkoxy-phthalocyanine, which acts as a light transmission modifying compound.

11. A film according to claim 10, wherein the said substituted alkoxy-phthalocyanine is incorporated in a polymer by dispersion or dissolution.

12. A film according to claim 10 or claim 11, wherein the light transmission modifying compound has the general formula 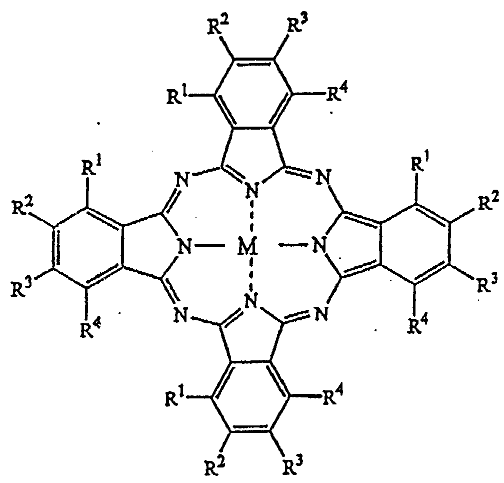 which represents a macrocyclic polydentate ligand and a divalent metal (M²⁺), and the substituents R¹, R², R³, R⁴ are respectively the same or different groups selected from alkyl, aryl, alkoxy, halogeno, or other functional groups which do not adversely affect the stability or performance of the plant cover or shading material.

13. A film according to claim 12, wherein the divalent metal cation is selected from Group II and Group III metals.

14. A film according to claim 12 or claim 13, wherein the divalent metal cation is selected from Mg, Fe, Co, Ni, Cu, Zn and Mn.

15. A film according to any one of claims 2 to 14, wherein the, or each, core polymer layer has a specific light absorption peak between 720 and 780 nm.

16. A film according to claim 15, wherein the, or each, core polymer layer has a narrow band absorption between 725 and 750 nm.

17. A film according to any one of claims 2 to 16, wherein the maximum absorption coefficient of the phthalocyanine compound, in the or each core polymer layer, in the 720 to 780 nm range is at least twice that of any other absorption peak in the 400 to 700 nm wave band.

18. A film according to claim 17, wherein the absorption of the, or each, core polymer layer is in the range 0.6 to 3.0 in the 720 to 780 nm waveband.

19. A film according to claim 18, wherein the absorption is in the range 0.8-2.0.

20. A film according to claim 17, wherein the transmission is in the range of 1% to 16%.

21. A film according to any one of claims 2 to 20, wherein the amount of phthalocyanine in the core polymer layer comprises from 0.1 to 0.2 grams per square metre of film

22. A film according to claim 1, wherein the weather resistant polymer provides at least one outer polymer layer.

23. A film according to claim 22, wherein the, or each, outer polymer layer comprises an olefin polymer or copolymer.

24. A film according to claim 23, wherein the, or each, outer polymer layer comprises a polyethylene polymer or copolymer.

25. A film according to any one of the preceding claims, comprising a hindered amine light stabiliser to protect the film from premature degradation.

26. A film according to any one of the preceding claims, comprising a polyolefin based copolymer additive functionalised with an acid anhydride to promote adhesion between layers based on polyamide and layers based on polyolefin.

27. A film according to any one of the preceding claims, comprising at least one UV absorber.

28. A film according to claim 27, wherein the UV absorber(s) comprise a benzophenone and/or benztriazole compound.

29. A greenhouse, comprising, as a cover material, a film according to any one of the preceding claims 1 to 28.

30. A tunnel greenhouse, comprising, as a cover material, a film according to any one of the preceding claims 1 to 28.
